# EUROPÄISCHE PATENTSCHRIFT

(11) **EP 1 619 493 B1**
(45) Veröffentlichungstag und Bekanntmachung des Hinweises auf die Patenterteilung: **04.12.2013**
(21) Anmeldenummer: 05015291.7
(22) Anmeldetag: 14.07.2005
(51) Int. Cl.: G01N 1/22, B08B 9/46

(54) **Verfahren und Vorrichtung zum Untersuchen von Behältern auf Fremdstoffe**
Method and device for inspecting containers for the presence of foreign material
Procédé et dispositif pour l'inspection de récipients quant à la présence de contaminations

(30) Priorität: 02.10.2004 DE 102004048146; 19.07.2004 DE 102004034852
(43) Veröffentlichungstag der Anmeldung: 25.01.2006
(73) Patentinhaber: Krieg, Gunther, Prof.Dr.Ing., 76227 Karlsruhe (DE)
(72) Erfinder: Bohleber, Jürgen, 77815 Bühl (DE); Frey, Dirk, 67630 Neewiller (FR); Bohe, Thomas, 76532 Baden-Baden (DE)
(74) Vertreter: Ullrich & Naumann

(56) Entgegenhaltungen:
- EP-A1- 0 747 690
- DE-A1- 19 710 913
- US-A- 5 913 237

## Beschreibung

Die Erfindung betrifft eine Vorrichtung zum Untersuchen von Behältern auf Fremdstoffe, mit mindestens einem auf einem Behälter aufsetzbaren Probenahmekopf sowie ein Verfahren zum Untersuchen von Behältern auf Fremdstoffe, wobei auf einen Behälter ein Probenahmekopf aufgesetzt wird.

Aus der EP 534 096 A2 sind ein gattungsgemäßes Verfahren und eine gattungsgemäße Vorrichtung zum Untersuchen von Behältnissen auf Fremdstoffe bekannt. Hierbei werden Behältnisse, wie Flaschen, von einem Zuführ-Förderer durch einen Übergabe-Kreisförderer übernommen und an einen Untersuchungs-Kreisförderer übergeben, von dem sie wieder an einen Übergabe-Kreisförderer abgegeben werden, der sie einer Fortführ-Förderbahn zuführt.

Der Untersuchungs-Kreisförderer trägt eine Vielzahl von Probenahmeköpfen, die demgemäß mit dem Untersuchungs-Kreisförderer und den durch diesen geförderten Flaschen umlaufen und relativ zu diesen vertikal auf- und abbewegbar sind, um so dichtend auf die Flaschen aufgesetzt und wieder von diesen gelöst zu werden. Sämtliche Probenahmeköpfe sind über einen Drehverteiler mit einer gemeinsamen Analyseeinrichtung verbunden, ,mittels derer die gezogenen Proben ausgewertet werden.

Die bekannte Einrichtung ist kompliziert aufgebaut und weist einen hohen technischen und damit kostenmäßigen Aufwand auf, da insbesondere bei der gegebenen Ausgestaltung notwendigerweise für jede Position einer Flasche auf dem Kreisförderer auch ein zugeordneter Probenahmekopf vorgesehen sein muss. Auch andere bekannte Vorrichtungen zur Entnahme von Gasproben aus Behältnissen sind kompliziert aufgebaut und weisen in der Regel eine Vielzahl von Probenahmeköpfen auf, wobei teilweise eine Lanze bis nahe des Bodens des Behälters in diesen eintaucht.

Es wurde eine Vorrichtung vorgeschlagen, bei der die Behälter unter einem vollständig stationären, in keiner Weise bewegten Probenahmekopf hindurch geführt werden. Eine sichere, aussagekräftige Probenahme ist hiermit nicht möglich.

Die DE 197 10 913 A1 zeigt neben einer optischen Messeinrichtung eine Gasentnahmevorrichtung mit einem Blasrohr sowie einem Saugrohr, die über eine Spindel abgesenkt werden. Dies bedingt eine intermittierende Bewegung der Flaschen, die also zur Probenahme stillgesetzt werden müssen. Ein kontinuierlicher Transport der Flaschen ist daher mit diesem System nicht möglich.

Die Patentschrift US 5,913,237 zeigt ferner eine Vorrichtung und ein Verfahren zur Probenahme von Gasen aus Behältern, bei denen an einem umlaufenden Band mehrere Probenahmeköpfe hintereinander in Umlaufrichtung angeordnet sind. Das Probenahmeband wird um zwei Umlenkrollen geführt. Zwischen diesen Umlenkrollen ist eine gebogene Führungsschiene vorgesehen, mittels derer das Band zwischen den beiden Umlenkrollen zu einem gegenüber deren tieferen Punkt bewegt werden kann, um so die Probenahmeköpfe zu den Öffnungen von entlang einer Ebene parallel zu den Mittelpunkten der beiden Umlenkrollen geführten, also in ihrer Höhe unveränderlichen Führungsbahn abwärts zu bewegen.

Nachteilig ist, dass das Führungsband an der Führungsschiene schleift, so dass zum Bewegen des Bandes ein hoher Kraftaufwand und damit ein hoher Energieeinsatz erforderlich ist, der durch die Reibung in Wärme verwandelt wird. Darüber hinaus ist Abnutzung gegeben.

Weiterhin ist nachteilig, dass bei einer solchen Konstruktion der Weg um die Probenahmeköpfe zu den Flaschenöffnungen und in diese hinein zu bewegen sehr lange ist. Um einen hinreichenden Durchsatz von zu prüfenden Flaschen zu erreichen, ist es daher, wie der Druckschrift zu entnehmen ist, notwendig mehrere Probenahmeköpfe derart hintereinander am Band anzuordnen, dass diese während des Bewegungsablaufs mit jeweils einem Behältnis in Verbindung stehen. Damit die Probenahmegase sich nicht vermischen, sind in der Führungsschiene parallele Nuten vorgesehen, die jeweils mit unterschiedlichen Entnahmeleitungen in Verbindung stehen. Die gesamte Konstruktion wird hierdurch äußerst aufwändig und unzuverlässig, da aufgrund der zum Führungsband offenen Nuten zwischen diesem und der Führungsschiene keine hinreichende Dichtigkeit gegeben ist und daher Gase auch zwischen den entsprechenden Nuten und damit den unterschiedlichen Probenahmeeinheiten sich austauschen können.

Die EP 0 747 690 beschreibt eine Vorrichtung zum Untersuchen von Behältern auf Fremdstoffe mit mindestens einem auf einen Behälter aufsetzbaren Entnahmevorsprung und zumindest einem eigenen Getriebe zum rotierenden Bewegen eines Probenahmekopfes, welcher Entnahmevorsprünge aufweist. Die Nachteile der EP 0 747 690 beruhen vor allem auf der Notwendigkeit eines Drehverteilers zur getrennten Probenahme aus den verschiedenen Entnahmevorsprüngen. Ferner ist wegen der Geschwindigkeitsdifferenz zwischen Entnahmevorsprung und Behälter die notwendige dichte Verbindung des Probenahmesystems ausgeschlossen. Darüberhinaus ist bei dieser Anordnung die Kollisionsgefahr zwischen Behälter und Probenahmesystem sehr hoch.

Der Erfindung liegt die Aufgabe zugrunde eine gattungsgemäße Vorrichtung zu schaffen, die bei hoher Sicherheit und Zuverlässigkeit der Probenahme und hoher Prüfungsfrequenz konstruktiv einfach aufgebaut ist. Der Erfindung liegt weiterhin ein Verfahren zugrunde, dass bei den vorgenannten Vorteilen durch eine konstruktiv einfache ausgebildete Vorrichtung durchgeführt werden kann.

Erfindungsgemäß wird die genannte Aufgabe durch eine Vorrichtung gemäß Anspruch 1 gelöst. Dabei ist zumindest ein eigenes Getriebe zum Bewegen des Probenahmekopfes über eine Teilstrecke der Bewegung des Behälters im Wesentlichen mit diesem vorgesehen. Zur Lösung der erfindungsgemäßen Aufgabe sieht die Erfindung weiterhin ein Verfahren gemäß Anspruch 19 vor, bei dem der Probenahmekopf mittels eines eigenen Antriebs mit dem Behälter mitbewegt wird.

Die Erfindung sieht also vor, dass die starre Verbindung zwischen Behältertransportmittel und Probenahmekopf zum Mitführen des Probenahmekopfes über eine gewisse Teilstrekke der Bewegung der Behälter gelöst wird und für den Probenahmekopf zur Mitbewegung mit den Behältern zumindest ein eigenes Getriebe vorgesehen wird.

Bei einer lediglich getrieblichen Verbindung zwischen Probenahmekopf und Bewegungseinrichtung für die Behälter bzw. deren Antrieb ist also ein gemeinsamer Antrieb mit unterschiedlichen Getrieben und Übersetzungen vorgesehen, während in der erstgenannten Alternative auch für die Mitbewegung des Probenahmekopfes ein separater zusätzlicher Antrieb (Motor) vorgesehen sein kann.

In beiden Fällen sieht die Erfindung in weiterer Ausgestaltung eine Synchronisationseinrichtung zum Synchronisieren der Bewegung der Behälter und des Probenahmekopfes zumindest über eine Teilstrecke vor. Entsprechend werden die Bewegungen von Behälter und Mitbewegung des Probenahmekopfes synchronisiert. Dabei kann die Bewegung von Probenahmekopf und Behälter elektronisch oder auch mechanisch synchronisiert werden. So sieht die Erfindung insbesondere bei einem separaten Antrieb für die Mitbewegung des Probenahmekopfes in bevorzugter Ausgestaltung eine elektronische Synchronisationseinrichtung vor. Alternativ werden bei einer lediglich getrieblichen Verbindung des Probenahmekopfes zum Antrieb der Transporteinrichtung für die Behälter die Bewegung des Behälters und die Mitbewegung des Probenahmekopfes mechanisch über ein Getriebe miteinander synchronisiert. Hierzu weist die erfindungsgemäße Vorrichtung eine mechanische Synchronisationseinrichtung, insbesondere in Form eines getrieblichen Übertragungselements auf.

Erfindungsgemäß ist vorgesehen, dass der Probenahmekopf entsprechend der Bewegung des Behälters mittels eines Excenterantriebs über eine Teilstrecke mitbewegt wird.

Weitere bevorzugte Ausgestaltungen der Erfindung sehen vor, dass ein in Eingriff mit einem exzentrisch am Excenter angeordnete Nocken stehendes Halteteil den Probenahmekopf trägt, wobei insbesondere Halteteil und Probenahmekopf nachgiebig miteinander verbunden sind, wobei Halteteil und Probenahmekopf vorzugsweise über eine Feder, insbesondere eine Schraubenfeder, elastisch miteinander verbunden sind.

In bevorzugter Weiterbildung kann darüber hinaus vorgesehen sein, dass das Halteteil durch ein Führungsgestänge geführt ist und insbesondere das Führungsgestänge derart ausgebildet ist, es dem Halteteil und damit dem Probenahmekopf eine beschränkte angulare Bewegung in einem engen Winkelbereich aufprägt, wobei vorzugsweise der Winkelbereich weniger als 10° ist.

Hierzu ist in konkreter Ausbildung der erfindungsgemäßen Vorrichtung vorgesehen, dass insbesondere das Führungsgestänge einen Hebel aufweist, der an einem Festpunkt schwenkbar angelenkt ist und mit seinem anderen Ende mit einer das Halteteil haltenden Führungsstange verbunden ist.

Um ein fluiddichtes Anliegen des Probenahmekopfes zu gewährleisten, verfügt die Probenahmeeinrichtung über eine Dichtkörper. Diese Dichtkörper ist aus einem weichen und/oder geschäumten Material gefertigt, so dass ein fluiddichtes Anliegen des Probenahmekopfes gewährleistet ist. Besonders bevorzugt ist jedoch ein Teil des Probenahmekopfes als Kugelinnenfläche aus einem verschleißfesten, gehärteten Edelstahl ausgeführt, so dass der Probenahmekopf in einem weiten Winkelbereich fluiddicht am Behälter anliegt. Diese Ausführungsform der Dichtkörper zeichnet sich durch geringen Verschleiß und damit hohe Störsicherheit aus.

Darüber hinaus sieht eine bevorzugte Ausgestaltung der Erfindung vor, dass der Probenahmekopf eine Druckluftlanze trägt, durch die nach Aufsetzen des Haltekopfs auf einem Behälter ein Druckluftstoß in diesen einblasbar ist.

Schließlich ist die erfindungsgemäße Vorrichtung dadurch ausgebildet, dass in den Haltekopf eine Probenahmeleitung mündet, mittels derer das Gas aus dem Behälter zu einem Messsystem führbar ist, wobei insbesondere der Probenahmekopf mittels zumindest eines eigenen Getriebes über eine Teilstrecke der Bewegung des Behälters im Wesentlichen mit diesem bewegt wird.

Zur Probenahme selbst sieht die Erfindung in Weiterbildung vor, dass bei Aufsitzen des Probenahmekopfes auf der Öffnung des Behälters ein Druckluftstoß in den Behälter eingebracht wird, wodurch Gas aus dem Behälter zu einer Messeinrichtung ausgetrieben wird, wo es dann entsprechend analysiert werden kann.

Weitere Vorteile und Merkmale der Erfindung ergeben sich aus den Ansprüchen und aus der nachfolgenden Beschreibung, in der ein Ausführungsbeispiel der Erfindung unter Bezugnahme auf die Zeichnungen im Einzelnen erläutert ist. Dabei zeigt bzw. zeigen:
- Fig. 1: eine schematische Darstellung der erfindungsgemäßen Vorrichtung in Seitenansicht;
- Fig. 2a, b: einen Ablauf der Probenahme gemäß der Erfindung in schematischer Darstellung, wobei Fig. 2a die Zuordnung von Probenahmekopf der zu prüfenden Behälter in der Bewegungsphase des Probenahmekopfes bei 0° und Fig. 2b den Ablauf der eigentlichen Probenahme über die Bewegungsphasen von 105° bis 255° zeigt.
- Fig. 3a: ein Führungsgestänge;
- Fig. 3b: das Führungsgestänge in schematischer Darstellung;
- Fig. 4a, b: einen Ablauf der Probenahme gemäß der Erfindung in schematischer Darstellung, wobei Fig. 4a die Zuordnung vom Probenahmekopf der zu prüfenden Behälter in der Bewegungsphase des Probenahmekopfes bei 0° und Fig. 4b den Ablauf der eigentlichen Probenahme über die Bewegungsphasen von 105° bis 255° zeigt.
- Fig. 5: ein Diagramm zur Bewegung von Saugkopf und Flaschenmündung

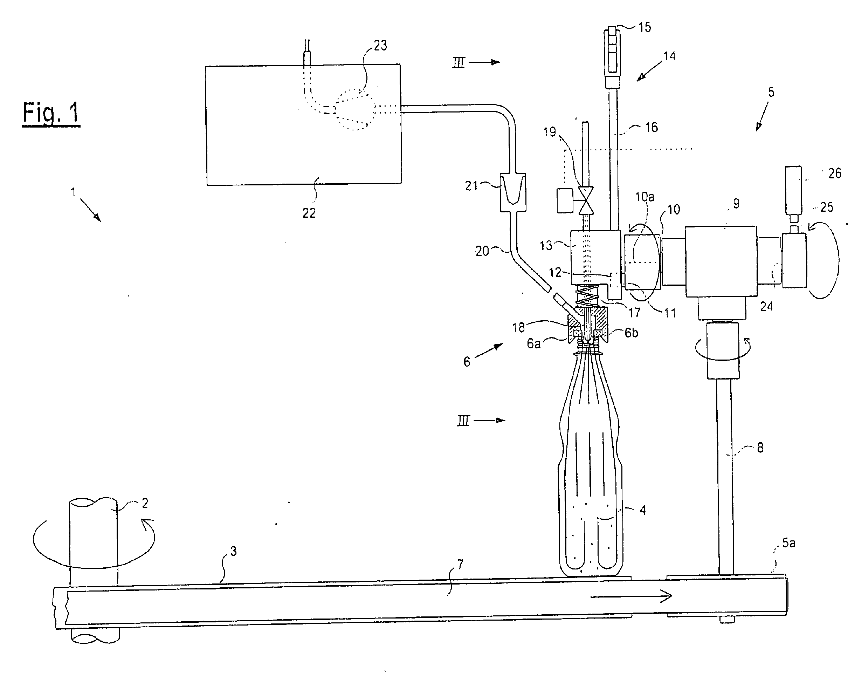

Die erfindungsgemäße Vorrichtung 1 weist im dargestellten Ausführungsbeispiel der Fig. 1 einen durch eine Welle 2 angetriebenen Kreisförderer 3 für zu untersuchende Behälter 4, hier wiederbefüllbare PET-Flaschen (REFPET-Flaschen), auf. In der Fig. 1 ist die Bewegung der Behälter 4 im Wesentlichen senkrecht zur Blattebene.

Mit dem Förderer 3 ist getrieblich ein Getriebe 5 für eine Probenahmeeinrichtung 6 mit einem Probenahmekopf 6a verbunden, der zur Probenahme jeweils auf einen Behälter 4 aufgesetzt wird.

Im dargestellten Ausführungsbeispiel weist das Getriebe 5 zum Antrieb der Probenahmeeinrichtung 6 einen auf eine Getriebescheibe 5a wirkenden Antriebsgurt 7 auf. Die Getriebescheibe 5a ist mit einer Welle 8 verbunden, die auf ein nicht näher dargestelltes Winkelgetriebe 9 wirkt, mit dessen Ausgangswelle ein Excenter 10 verbunden ist, der mit einem exzentrisch zu seiner Drehachse 10a angeordneten Nokken 11 in eine Ausnehmung 12 (gestrichelt dargestellt) eines Halteteils 13 in Form eines Halteblocks für den Probenahmekopf 6a eingreift. Das Halteteil 13 ist über ein Führungsgestänge 14 gehalten und geführt.

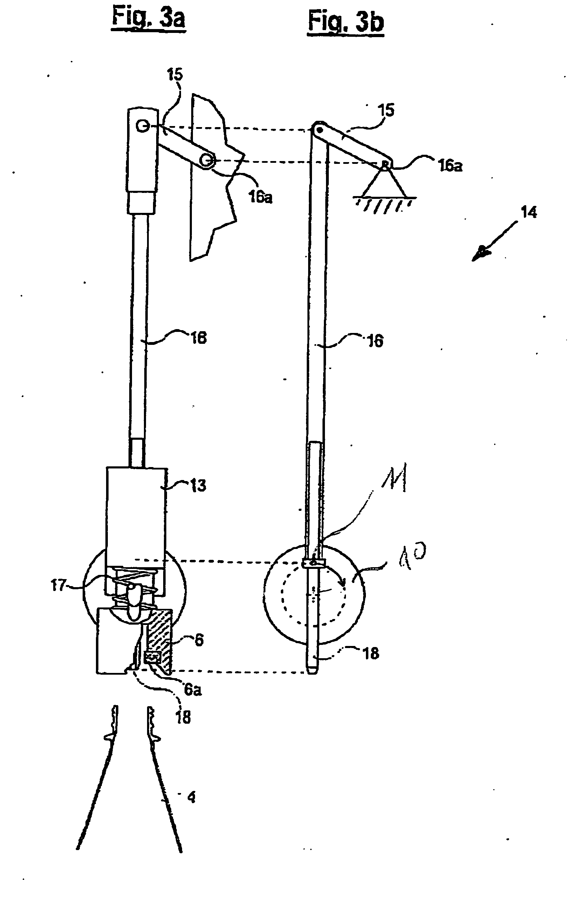

Das Führungsgestänge ist in den Fig. 3a, 3b genauer in Blickrichtung III-III der Fig. 1 dargestellt.

Das Führungsgestänge weist einen Hebel 15 auf, der an einem Festpunkt 16 schwenkbar angelenkt ist. Mit seinem anderen Ende ist er gelenkig mit einer Führungsstange 16 verbunden, die fest und starr mit dem Halteteil 13 verbunden ist und diesen bei seiner durch den Nocken 11 verursachten Bewegung führt (Fig. 3a und 3b). Durch das Führungsgestänge wird der Umfang des Nockens 11 bei konstanter Winkelgeschwindigkeit gezeigt. Die ungleichmäßige horizontale Bewegung des Anlenkpunktes des Gestänges 14 am Halteteil 13 wird hinsichtlich des Probenahmekopfes 6a weitgehend kompensiert, so dass dieser der Bewegung der Behälter folgen kann.

Der Probenahmekopf 6a ist nachgiebig in Richtung der Führungsstange 16 am Halteteil 13 angeordnet, beispielsweise durch eine Schraubenfeder 17, wobei er gegenüber dem Haltekopf 13 auch eine gewisse Angularbeweglichkeit aufweisen kann.

In den Probenahmekopf 6a führt zunächst eine Druckluftlanze 18, deren Druckluftzufuhr über ein Ventil 19 steuerbar ist. Weiterhin mündet in den oberen Bereich des Probenahmekopfes 6a ein Probenahmeschlauch 20, der über einen Filter 21, der Fest- und Flüssigteilchen ausfiltert, mit einem Messsystem 22 verbunden ist. Nicht notwendigerweise, aber vorteilhaft, ist eine Saugpumpe 23 im Probenahmeschlauch-System vorgesehen.

Auf der dem Excenter 10 abgewandten Seite des Winkelgetriebes 9 findet sich eine weitere Abtriebswelle 24, die an ihrem Umfang eine Schaltnocke 25, welche über einen zugeordneten Impulsgeber 26 das Ventil 19 in der Druckluftlanze 18 steuert.

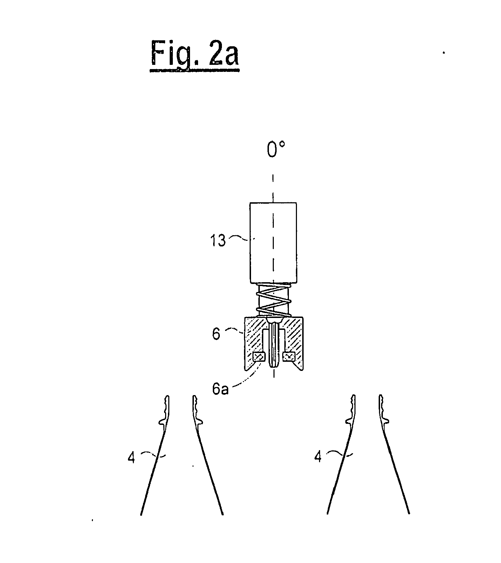

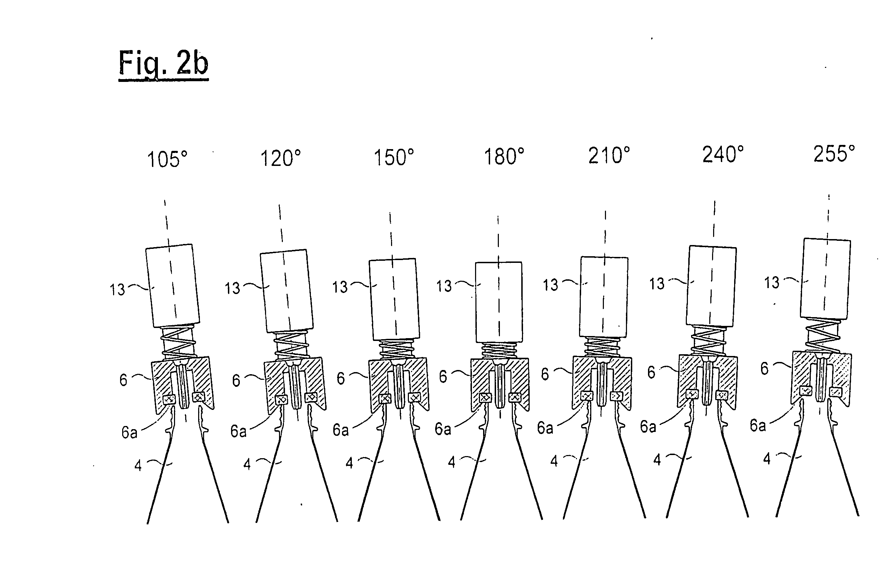

Im Folgenden ist insbesondere unter Bezug auf die Fig. 2 die Funktion der erfindungsgemäßen Vorrichtung und damit das erfindungsgemäße Proberiahmeverfahren erläutert:
Die Stellung, in der sich das Halteteil 13 und damit der Probenahmekopf 6a in ihrer obersten Stelle befindet, wird als 0°-Stellung bezeichnet, während die Position, in der das Halteteil 13 und damit der Probenahmekopf 6a weitestmöglich nach unten gedrückt ist, als 180°-Stellung bezeichnet wird. In der 0°-Stellung ist die horizontale Zuordnung von Probenahmekopf 6a und Behälter in Bewegungsrichtung der Behälter derart, dass sich der Probenahmekopf etwa mittig zwischen zwei gegenüberliegenden Behältern befindet.

Die Bewegung des Behälters 4 sowie die hierzu parallel verlaufende Komponente (Horizontalkomponente) des Halteteils 13 und damit des Probenahmekopfes 6 sind miteinander synchronisiert, im dargestellten Ausführungsbeispiel durch das beschriebene Getriebe und Führungsgestänge, so dass beide Bewegungen in ihrer Geschwindigkeit und Richtung im Wesentlichen übereinstimmen.

Ein Behälter 4 gelangt mit seiner Öffnung unterhalb des Probenahmekopfes 6a in der 90°-Position desselben. Bei 105° umgreift der untere Rand des Probenahmekopfes 6a gerade den oberen Rand des Behälters 4. Bei etwa 120° setzt die Dichtung 6b des Probenahmekopfes auf dem oberen Rand des Probenahmekopfes 6a auf dem oberen Rand des Behälters auf. Zu dieser Bewegungsphase gelangt auch die Schaltnocke 25 zum Impulsgeber 26 und löst damit durch Öffnen des Ventils 19 einen Druckluftimpuls über die Düse der Druckluftlanze 18 in den Behälter aus, wodurch das in diesem befindliche Gas über die Probenahmeleitung 20 zum Messsystem 22 geleitet wird.

Bei weiteren Bewegungen bis 180° bewegt sich der Halteblock 13 weiter nach unten, während der Probenahmekopf 6a an einer weiteren Bewegung nach unten durch den oberen Rand des Behälters 4 gehindert wird. Durch die elastische Verbindung zwischen Probenahmekopf 6a und Halteteil 13 drückt letzterer den Probenahmekopf 6a fest gegen den oberen Rand des Behälters.

Bei 180° erreicht, wie gesagt, das Halteteil 13 seine niedrigste Position und übt damit die größte Andruckkraft auf den Probenahmekopf 6a aus.

Die Probe wird im Messsystem analysiert, vorzugsweise spektroskopisch mittels UV- oder IR-Licht oder mittels Mikrowellenstrahlung, wobei allerdings auch andere Messmethoden, wie Massenspektrometrie oder die sogenannte TOF-Technik (Time of Flight) eingesetzt werden kann, wobei eine Ionisierung des aus dem Behälter 4 ausgetriebenen Gases und eine Beschleunigung der Gasfahrtmoleküle im elektrischen Feld erfolgt und die Gasarten sich über eine vorgegebene Strecke ergebenen Flugzeiten bestimmt werden.

Mit der weiteren Bewegung über die 180°-Position hinaus hebt der Halteblock 13 sich wieder vom Behälter 4 ab und löst damit den Probenahmekopf 6a von der Behälteröffnung, wobei bei spätestens 270° der Probenahmekopf 6a die Oberseite des Behälters 4 völlig frei gibt, so dass der Behälter durch den Förderer 2 frei weitergefördert werden kann, während der Halteblock 13 und damit der Probenahmekopf 6 wieder in die 0°-Stellung zurückgeführt werden und nach erneutem Absenken in die 90°-Stellung wieder über die Öffnung des nächsten Behälters gelangen, so dass diesem in der beschriebenen Weise Gas zur Untersuchung entnommen werden kann.

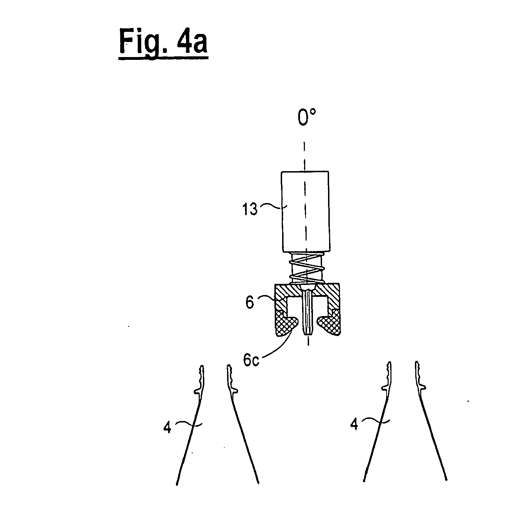

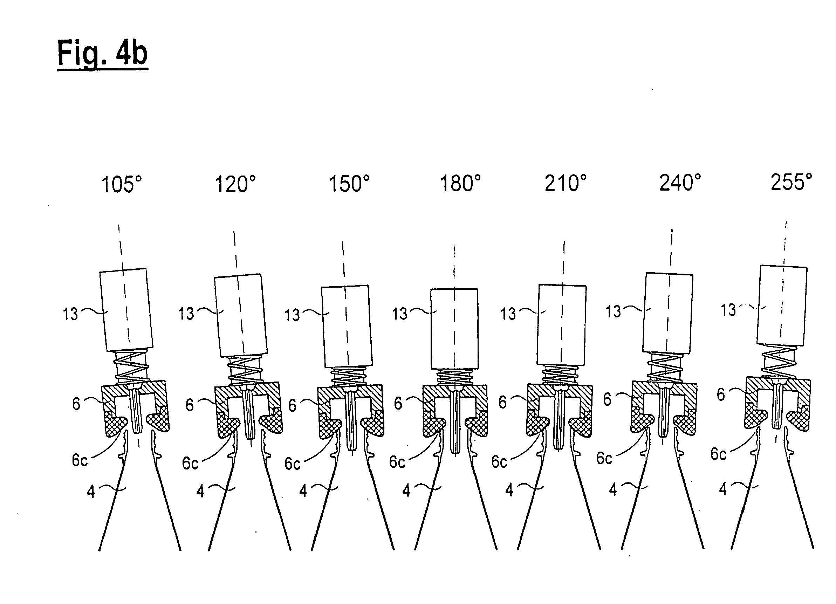

Eine besonders bevorzugte Ausführungsform der erfindungsgemäßen Vorrichtung ist in den Fig. 4a und 4b dargestellt. Im Unterschied zu der in den Fig. 2a, 2b dargestellten Ausführungsform ist hier der Probenahmekopf 6a mit einem Dichtkörper 6c so ausgeformt, dass seine an der Behälteröffnung anliegende, gewölbte Dichtfläche nach innen und zur Behälteröffnung hin im Querschnitt konvex ausgebildet ist. Die Dichtfläche entspricht insbesondere derjenigen eines Kugelinnenseiteausschnitts. Hierdurch wird zuverlässig ein fluiddichtes Anliegen des Dichtkörpers 6c am Behälter 4 über einen weiten Winkelbereich gewährleistet. Dieser Dichtkörper 6c besteht aus einem verschleißfesten, gehärteten Material, wie Edelstahl, so dass er einem geringen Verschleiß unterliegt und so für geringe Störanfälligkeit sorgt. Wie in Fig. 4b dargestellt, fährt die Druckluftlanze 18 vorteilhaft beim Aufsetzen des Probenahmekopfes 6a auf den Behälter 4 in den Behälter 4 ein, es federt also nur der abdichtende Probenahmekopf 6a nach, während die Druckluftlanze 18 exakt der Bewegung des Excenters 10 folgt. Bis auf diese Unterschiede wird die Probenahme wie in Fig. 2b dargestellt durchgeführt.

Erfindungsgemäß wird durch den Einsatz einer halbkugelförmigen bzw. konvexen Form des Dichtkörpers zwischen Flaschenmündung und Probenahmesystem in jeder Schräglage eine vakuumdichte Verbindung erreicht. Ferner können verschlei-ßende Dichtungen entfallen, da die Halbkugel z.B. insbesondere auch aus Hartmetall bestehen kann.

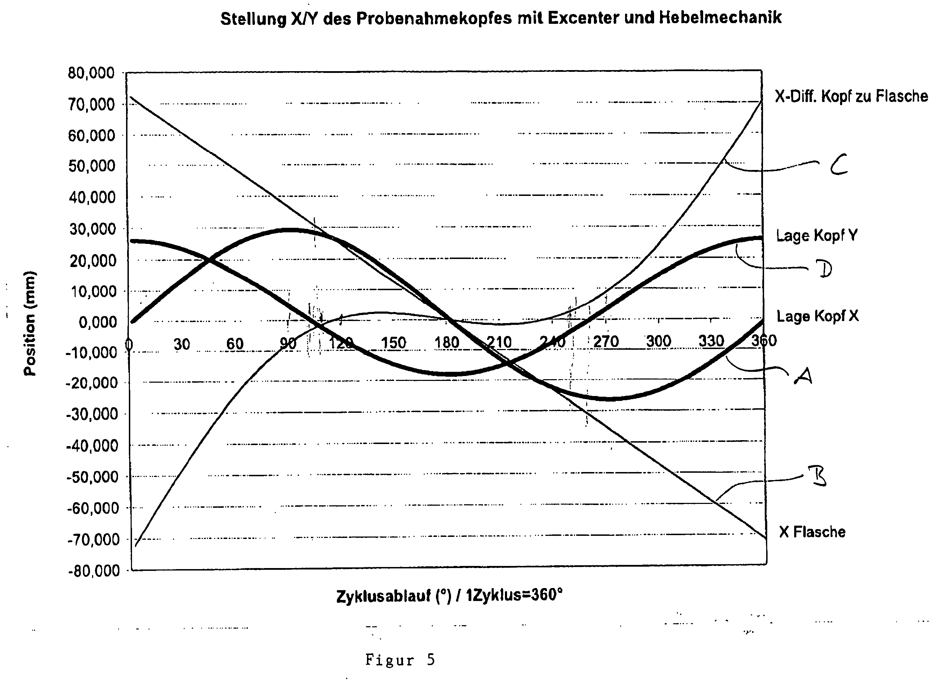

Ein entscheidender Vorteil der Erfindung liegt darin, daß erfindungsgemäß durch Einsatz eines Hebels und eines Excenters eine Bewegungskurve entsteht, die eine extrem verlängerte Kontaktzeit zwischen der Flaschenmündung und der Absaugvorrichtung ermöglicht. In der Figur 5 ist zunächst mit der Kurve A die horizontale Bewegung oder Position des Probenahmekopfes 6a, also in X-Richtung, entlang des Weges der Mündung des Behälters 4 über die Winkelstellung der Drehachse 10a dargestellt. Der Weg der Mündung des Behälters 4 in Zuordnung zu der Winkelstellung der Achse 10a, ebenfalls in X-Richtung, ist durch die Gerade B dargestellt. Weiter ist in der Kurve C die Differenz der X-Positionen, also der Positionen in Bewegungsrichtung der Behälter, von Probenahmekopf 6a und Mündung des Behälters 4 dargestellt. Die Kurve D bezeichnet die Vertikal- oder Y-Position des Probenahmekopfes 6a oberhalb der Mündung des Behälters 4 in Abhängigkeit von der Winkelstellung der Welle 10a. Es ist ersichtlich, daß Probenahmekopf 6a und Mündung des Behälters 4 über eine sehr großen Winkelbereich von ca. 160° (von ca. 100° bis 260° im Diagramm der Fig. 5) sich nahezu in X-Richtung gemeinsam bewegen.

Als Ergebnis ergibt sich eine effektive Absaugung des Gasinhalts der jeweiligen Flasche, so daß in der Messzelle um Faktoren höhere Gasmengen vorliegen. Entsprechend steigt die Sensitivität der Detektion gegenüber den Vorrichtungen gemäß dem Stand der Technik an.

### Bezugszeichenliste

- 1: Vorrichtung
- 2: Welle
- 3: Kreisförderer
- 4: Behälter
- 5: Getriebe
- 5a: Getriebescheibe
- 6: Probenahmeeinrichtung
- 6a: Probenahmekopf
- 6b: Dichtung
- 7: Impulsgeber
- 7: Antriebsgurt
- 8: Welle
- 9: Winkelgetriebe
- 10: Excenter
- 10a: Drehachse
- 11: Nocken
- 12: Ausnehmung
- 13: Halteteil
- 14: Führungsgestänge
- 15: Hebel
- 16: Führungsstange
- 16a: Festpunkt
- 17: Schraubenfeder
- 18: Druckluftlanze
- 19: Ventil
- 20: Probenahmeschlauch
- 21: Filter
- 22: Messsystem
- 23: Saugpumpe
- 24: Abtriebswelle
- 25: Schaltnocke
- 26: Impulsgeber

## Patentansprüche

1. Vorrichtung zum Untersuchen von Behältern auf Fremdstoffe, mit mindestens einem auf einen Behälter aufsetzbaren Probenahmekopf (6) mit zumindest einem eigenen Getriebe (5) zum Bewegen des Probenahmekopfes (6) in Achsrichtung des Behälters (4) sowie über eine Teilstrecke der Bewegung des Behälters (4) im Wesentlichen mit diesem und zum elastischen Andrücken des Probenahmekopfes (6) gegen eine Öffnung des Behälters, **dadurch gekennzeichnet, dass** die Vorrichtung einen Exzenter (10) zum Bewegen des Probenahmekopfes (6) über eine Teilstrecke der Bewegung des Behälters (4) im Wesentlichen mit diesem aufweist.

2. Vorrichtung nach Anspruch 1, **gekennzeichnet durch** einen eigenen Antrieb (5a, 7, 8) für die der Bewegung des Behälters (4) entsprechende Bewegung des Probenahmekopfes (6).

3. Vorrichtung nach Anspruch 1, **dadurch gekennzeichnet, dass** das Getriebe (5) für den Probenahmekopf (6) mit dem Antrieb für die Bewegung der Behälter (4) verbunden ist.

4. Vorrichtung nach einem der Ansprüche 1 bis 3, **gekennzeichnet durch** eine Synchronisationseinrichtung zum Synchronisieren der Bewegung der Behälter (4) und des Probenahmekopfes (6) zumindest über eine Teilstrecke.

5. Vorrichtung nach Anspruch 4 in Verbindung mit Anspruch 2, **gekennzeichnet durch** eine elektronische Synchronisationseinrichtung.

6. Vorrichtung nach Anspruch 4 in Verbindung mit Anspruch 3, **gekennzeichnet durch** eine mechanische Synchronisationseinrichtung, insbesondere in Form eines getrieblichen Übertragungselements (7).

7. Vorrichtung nach einem der vorangehenden Ansprüche, **dadurch gekennzeichnet, dass** ein in Eingriff mit einem exzentrisch am Exzenter (10) angeordneten Nocken (11) stehendes Halteteil (13) den Probenahmekopf (6) trägt.

8. Vorrichtung nach Anspruch 7, **dadurch gekennzeichnet, dass** Halteteil (13) und Probenahmekopf (6) nachgiebig miteinander verbunden sind.

9. Vorrichtung nach Anspruch 8, **dadurch gekennzeichnet, dass** Halteteil (13) und Probenahmekopf (6) über eine Feder (17), vorzugsweise eine Schraubenfeder elastisch miteinander verbunden sind.

10. Vorrichtung nach Anspruch 8 oder 9, **dadurch gekennzeichnet, dass** das Halteteil (13) durch ein Führungsgestänge (14) geführt ist.

11. Vorrichtung nach Anspruch 10, **dadurch gekennzeichnet, dass** das Führungsgestänge (14) derart ausgebildet ist, dass es dem Halteteil (13) und damit dem Probenahmekopf (6) eine beschränkte angulare Bewegung in einem engen Winkelbereich aufprägt.

12. Vorrichtung nach Anspruch 11, **dadurch gekennzeichnet, dass** der Winkelbereich weniger als 10° ist.

13. Vorrichtung nach einem der Ansprüche 10 bis 12, **dadurch gekennzeichnet, dass** das Führungsgestänge einen Hebel (15) aufweist, der an einem Festpunkt (16a) schwenkbar angelenkt ist und mit seinem anderen Ende mit einer das Halteteil (13) haltenden Führungsstange (16) verbunden ist.

14. Vorrichtung nach einem der vorangehenden Ansprüche, **dadurch gekennzeichnet, dass** der Probenahmekopf (6) über einen Dichtkörper (6a, 6c) verfügt.

15. Vorrichtung nach Anspruch 14, **dadurch gekennzeichnet, dass** der Dichtkörper (6a, 6c) aus weichem und/oder geschäumten Material besteht.

16. Vorrichtung nach Anspruch 14, **dadurch gekennzeichnet, dass** der Dichtkörper (6c) einen nach innen hin konvexen Querschnitt aufweist.

17. Vorrichtung nach einem der vorangehenden Ansprüche, **dadurch gekennzeichnet, dass** der Probenahmekopf (6) eine Druckluftlanze (18) trägt, durch die nach Aufsetzen des Probenahmekopfs (6) auf einem Behälter (4) ein Druckluftstoß in diesen einblasbar ist.

18. Vorrichtung nach einem der vorangehenden Ansprüche, **dadurch gekennzeichnet, dass** in den Probenahmekopf (6) eine Probenahmeleitung (20) mündet, mittels derer das Gas aus dem Behälter (4) zu einem Messsystem (22) führbar ist.

19. Verfahren zum Untersuchen von Behältern (4) auf Fremdstoffe, wobei ein Probenahmekopf (6) auf einen Behälter (4) aufgesetzt wird, wobei der Probenahmekopf (6) mittels zumindest eines eigenen Getriebes (5) in Achsrichtung des Behälters (4) sowie über eineTeilstrecke der Bewegung des Behälters (4) im Wesentlichen mit diesem bewegt und elastisch gegen eine Öffnung des Behälters gedrückt wird, **dadurch gekennzeichnet, dass** der Probenahmekopf (6) durch einen Exzenter (10) über eine Teilstrecke des Behälters mitbewegt wird.

20. Verfahren nach Anspruch 19, **dadurch gekennzeichnet, dass** der Probenahmekopf mittels eines eigenen Antriebs mit dem Behälter mitbewegt wird.

21. Verfahren nach Anspruch 19, **dadurch gekennzeichnet, dass** der Probenahmekopf über ein Getriebe durch den Antrieb für die Bewegung der Behälter mitbewegt wird.

22. Verfahren nach einem der Ansprüche 19 bis 21, **dadurch gekennzeichnet, dass** Bewegungen von Behälter und Mitbewegung des Probenahmekopfes miteinander synchronisiert werden.

23. Verfahren nach Anspruch 21 in Verbindung mit Anspruch 17, **dadurch gekennzeichnet, dass** die Bewegung von Probenahmekopf und Behälter elektronisch synchronisiert werden.

24. Verfahren nach Anspruch 22 in Verbindung mit Anspruch 21, **dadurch gekennzeichnet, dass** Bewegung von Behälter und Probenahmekopf mechanisch über ein Getriebe miteinander synchronisiert werden.

25. Verfahren nach einem der Ansprüche 19 bis 24, **dadurch gekennzeichnet, dass** beim Aufsitzen des Probenahmekopfes auf eine Öffnung des Behälters in diesen ein Luftdruckstoß eingebracht wird, durch welches Gas aus dem Behälter ausgetrieben wird.

26. Verfahren nach Anspruch 25, **dadurch gekennzeichnet, dass** das aus dem Behälter ausgetriebene Gas analysiert wird.

## Claims

1. Device for inspecting containers with regard to foreign materials, having at least one sampling head (6) which can be placed on a container, having at least one separate gear mechanism (5) for moving the sampling head (6) in an axial direction of the container (4) and over a part-portion of the movement of the container substantially therewith and for resiliently pressing the sampling head (6) against an opening of the container,
**characterised in that** the device has an eccentric member (10) for moving the sampling head (6) over a part-portion of the movement of the container (4) substantially therewith.

2. Device according to claim 1, **characterised by** a separate drive (5a, 7, 8) for the movement of the sampling head (6) corresponding to the movement of the container (4).

3. Device according to claim 1, **characterised in that** the gear mechanism (5) for the sampling head (6) is connected to the drive for the movement of the containers (4).

4. Device according to any one of claims 1 to 3, **characterised by** a synchronisation device for synchronising the movement of the containers (4) and the sampling head (6) at least over a part-portion.

5. Device according to claim 4 together with claim 2, **characterised by** an electronic synchronisation device.

6. Device according to claim 4, together with claim 3, **characterised by** a mechanical synchronisation device, in particular in the form of a gear-like transmission element (7).

7. Device according to any one of the preceding claims, **characterised in that** a retention member (13) which is in engagement with a cam (11) which is arranged in an eccentric manner on the eccentric member (10) carries the sampling head (6).

8. Device according to claim 7, **characterised in that** the retention member (13) and sampling head (6) are connected to each other in a flexible manner.

9. Device according to claim 8, **characterised in that** the retention member (13) and sampling head (6) are connected to each other in a resilient manner by means of a spring (17), preferably a helical spring.

10. Device according to claim 8 or claim 9, **characterised in that** the retention member (13) is guided by a guiding rod assembly (14).

11. Device according to claim 10, **characterised in that** the guiding rod assembly (14) is constructed in such a manner that it imparts to the retention member (13) and consequently the sampling head (6) a limited angular movement in a narrow angular range.

12. Device according to claim 11, **characterised in that** the angular range is less than 10°.

13. Device according to any one of claims 10 to 12, **characterised in that** the guiding rod assembly has a lever (15) which is pivotably articulated to a fixed point (16a) and is connected with the other end thereof to a guiding rod assembly (16) which retains the retention member (13).

14. Device according to any one of the preceding claims, **characterised in that** the sampling head (6) has a sealing member (6a, 6c).

15. Device according to claim 14, **characterised in that** the sealing member (6a, 6c) comprises soft and/or foamed material.

16. Device according to claim 14, **characterised in that** the sealing member (6c) has a cross-section which is inwardly convex.

17. Device according to any one of the preceding claims, **characterised in that** the sampling head (6) carries a compressed air lance (18), by means of which a blast of compressed air can be blown into a container (4) after the sampling head (6) has been placed on a container (4).

18. Device according to any one of the preceding claims, **characterised in that** there opens in the sampling head (6) a sampling line (20) by means of which the gas can be directed out of the container (4) to a measuring system (22).

19. Method for inspecting containers (4) with regard to foreign materials, a sampling head (6) being placed on a container (4), the sampling head (6) being moved by means of at least one separate gear mechanism (5) in an axial direction of the container (4) and over a part-portion of the movement of the container (4) substantially therewith and is resiliently pressed against an opening of the container, **characterised in that** the sampling head (6) is also moved by means of an eccentric member (10) over a part-portion of the container.

20. Method according to claim 19, **characterised in that** the sampling head is also moved by means of a separate drive with the container.

21. Method according to claim 19, **characterised in that** the sampling head is also moved by means of a gear mechanism by the drive for the movement of the containers.

22. Method according to any one of claims 19 to 21, **characterised in that** movements of the container and joint movement of the sampling head are synchronised with each other.

23. Method according to claim 21 together with claim 17, **characterised in that** the movement of the sampling head and container are electronically synchronised.

24. Method according to claim 22, together with claim 21, **characterised in that** the movement of the container and sampling head are synchronised with each other mechanically by means of a gear mechanism.

25. Method according to any one of claims 19 to 24, **characterised in that**, when the sampling head is placed on an opening of the container, a blast of compressed air by means of which gas is discharged from the container is introduced therein.

26. Method according to claim 25, **characterised in that** the gas which is discharged from the container is analysed.

## Revendications

1. Dispositif permettant de contrôler la présence de contaminations dans des récipients, comportant au moins une tête de prélèvement d'échantillons (6) apte à être posée sur un récipient, comportant au moins un engrenage (5) propre, destiné à déplacer la tête de prélèvement d'échantillons (6) dans la direction axiale du récipient (4) et sur un tronçon du déplacement du récipient (4) sensiblement avec celui-ci et destiné à presser élastiquement la tête de prélèvement d'échantillons (6) contre une ouverture du récipient, **caractérisé en ce que** ledit dispositif comporte un excentrique (10) destiné à déplacer la tête de prélèvement d'échantillons (6) sur un tronçon du déplacement du récipient (4) sensiblement avec celui-ci.

2. Dispositif selon la revendication 1, **caractérisé par** son propre système d'entraînement (5a, 7, 8) pour le déplacement de la tête de prélèvement d'échantillons (6) conformément au déplacement du récipient (4).

3. Dispositif selon la revendication 1, **caractérisé en ce que** l'engrenage (5) pour la tête de prélèvement d'échantillons (6) est relié au système d'entraînement pour le déplacement du récipient (4).

4. Dispositif selon l'une quelconque des revendications 1 à 3, **caractérisé par** un dispositif de synchronisation destiné à synchroniser le déplacement du récipient (4) et de la tête de prélèvement d'échantillons (6) au moins sur un tronçon.

5. Dispositif selon la revendication 4 en association avec la revendication 2, **caractérisé par** un dispositif de synchronisation électronique.

6. Dispositif selon la revendication 4 en association avec la revendication 3, **caractérisé par** un dispositif de synchronisation mécanique, en particulier sous la forme d'un élément de transmission (7) à engrenage.

7. Dispositif selon l'une quelconque des revendications précédentes, **caractérisé en ce qu'**un élément de retenue (13), qui entre en prise avec une came (11) agencée excentriquement sur l'excentrique (10), porte la tête de prélèvement d'échantillons (6).

8. Dispositif selon la revendication 7, **caractérisé en ce que** l'élément de retenue (13) et la tête de prélèvement d'échantillons (6) sont reliés entre eux de manière flexible.

9. Dispositif selon la revendication 8, **caractérisé en ce que** l'élément de retenue (13) et la tête de prélèvement d'échantillons (6) sont reliés élastiquement entre eux par l'intermédiaire d'un ressort (17), de préférence un ressort cylindrique.

10. Dispositif selon la revendication 8 ou 9, **caractérisé en ce que** l'élément de retenue (13) est guidé au moyen d'une tringlerie de guidage (14).

11. Dispositif selon la revendication 10, **caractérisé en ce que** la tringlerie de guidage (14) est réalisée de telle sorte qu'elle implique à l'élément de retenue (13) et donc à la tête de prélèvement d'échantillons (6) un mouvement angulaire limité dans une étroite plage angulaire.

12. Dispositif selon la revendication 11, **caractérisé en ce que** la plage angulaire est inférieure à 10°.

13. Dispositif selon l'une quelconque des revendications 10 à 12, **caractérisé en ce que** la tringlerie de guidage comporte un levier (15) qui est articulé de manière pivotante sur un point fixe (16a) et qui est relié par son autre extrémité à une tige de guidage (16) qui maintient l'élément de retenue (13).

14. Dispositif selon l'une quelconque des revendications précédentes, **caractérisé en ce que** la tête de prélèvement d'échantillons (6) comporte un corps d'étanchéité (6a, 6c).

15. Dispositif selon la revendication 14, **caractérisé en ce que** le corps d'étanchéité (6a, 6c) est réalisé dans un matériau souple et/ou expansé.

16. Dispositif selon la revendication 14, **caractérisé en ce que** le corps d'étanchéité (6c) possède une section transversale convexe vers l'intérieur.

17. Dispositif selon l'une quelconque des revendications précédentes, **caractérisé en ce que** la tête de prélèvement d'échantillons (6) porte une lance à air comprimé (18), par laquelle une poussée d'air comprimé peut être insufflée dans un récipient (4) après la pose de la tête de prélèvement d'échantillons (6) sur ledit récipient.

18. Dispositif selon l'une quelconque des revendications précédentes, **caractérisé en ce que** dans la tête de prélèvement d'échantillons (6) débouche une conduite (20), par laquelle le gaz est guidé hors du récipient (4) vers un système de mesure (22).

19. Procédé permettant de contrôler la présence de contaminations dans des récipients, une tête de prélèvement d'échantillons (6) étant posée sur un récipient (4), ladite tête de prélèvement d'échantillons (6) étant déplacée sensiblement avec le récipient (4) dans la direction axiale du récipient (4) et sur un tronçon du déplacement dudit récipient et étant pressée élastiquement contre une ouverture du récipient au moyen de son au moins un propre engrenage (5), **caractérisé en ce que** la tête de prélèvement d'échantillons (6) est déplacée avec le récipient sur un tronçon dudit récipient au moyen d'un excentrique (10).

20. Procédé selon la revendication 19, **caractérisé en ce que** la tête de prélèvement d'échantillons est déplacée avec le récipient au moyen de son propre système d'entraînement.

21. Procédé selon la revendication 19, **caractérisé en ce que** la tête de prélèvement d'échantillons est déplacée avec le récipient par un engrenage au moyen du système d'entraînement destiné à déplacer le récipient.

22. Procédé selon l'une quelconque des revendications 19 à 21, **caractérisé en ce que** les déplacements du récipient et le déplacement conjoint de la tête de prélèvement d'échantillons sont synchronisés entre eux.

23. Procédé selon la revendication 21 en association avec la revendication 17, **caractérisé en ce que** le déplacement de la tête de prélèvement d'échantillons et du récipient sont synchronisés par voie électronique.

24. Procédé selon la revendication 22 en association avec la revendication 21, **caractérisé en ce que** le déplacement du récipient et de la tête de prélèvement d'échantillons sont synchronisés mécaniquement au moyen d'un engrenage.

25. Procédé selon l'une quelconque des revendications 19 à 24, **caractérisé en ce que**, au moment de la pose de la tête de prélèvement d'échantillons sur une ouverture du récipient, on injecte dans ce dernier une poussée d'air comprimé, par laquelle le gaz est poussé hors du récipient.

26. Procédé selon la revendication 25, **caractérisé en ce que** le gaz poussé hors du récipient est analysé.
